# EUROPÄISCHE PATENTANMELDUNG

(11) **EP 1 168 395 A2**
(43) Veröffentlichungstag der Anmeldung: **02.01.2002**
(21) Anmeldenummer: 01114519.0
(22) Anmeldetag: 16.06.2001
(51) Int. Cl.: H01H 23/14, H01H 9/18

(54) **Elektrische Schaltvorrichtung**

(30) Priorität: 21.06.2000 DE 20010996 U
(71) Anmelder: GIRA GIERSIEPEN GmbH. & CO. KG., D-42477 Radevormwald (DE)
(72) Erfinder: Zimmermann, Mike, 42477 Radevormwald (DE)
(74) Vertreter: Patentanwälte Dr. Solf & Zapf

(57) **Zusammenfassung**

Die Erfindung betrifft eine elektrische Schaltvorrichtung mit einem Tastschalter und mit einem dem Tastschalter zugeordneten Kennzeichnungselement, wobei der Tastschalter eine in einer Rahmenkonstruktion federnd gelagerte Tast-Wippe umfaßt, die auf mindestens einen Schaltkontakt einwirkt, welcher auf einer Schaltplatine angeordnet ist, wobei unterhalb von zwei gegenüberliegenden Wippenenden zwischen der Tast-Wippe und der Schaltplatine jeweils mindestens ein Druckfederelement angeordnet ist. Um eine solche elektrische Schaltvorrichtung mit konstruktiv einfachen Mitteln derart zu verbessern, daß sie eine eindeutige Zuordnung des Kennzeichnungselementes zum zugehörigen Tastschalter gestattet, wobei letzteres bedarfsweise auch zur Signalisierung dynamisch veränderlicher Schaltzustände eingesetzt werden soll, ist das Kennzeichnungselement auf der Schaltplatine angeordnet und von der Tast-Wippe brückenartig übergriffen, wobei die Tast-Wippe in der Rahmenkonstruktion frei gelagert und seitlich des Kennzeichnungselementes mit einem eine Schaltverkippung zulassendem seitlichem Spiel senkrecht zur Erstreckungsebene der Schaltplatine anschlagbar geführt ist.

## Beschreibung

Die Erfindung betrifft eine elektrische Schaltvorrichtung, mit einem Tastschalter und mit einem dem Tastschalter zugeordneten Kennzeichnungselement, wobei der Tastschalter eine in einer Rahmenkonstruktion federnd gelagerten Tast-Wippe umfaßt, die auf mindestens einen Schaltkontakt einwirkt, welcher auf einer Schaltplatine angeordnet sind, wobei unterhalb von zwei gegenüberliegenden Wippenenden zwischen der Tast-Wippe und der Schaltplatine jeweils mindestens ein Druckfederelement angeordnet ist.

Solcherart aufgebaute elektrische Tastschalter sind unter anderem aus dem deutschen Gebrauchsmuster DE-U-298 05 719 und aus der europäischen Patentschrift EP-B-0 678 885 bekannt und können beispielsweise in modernen Wohn- oder Bürogebäuden zur Bedienung und Überwachung verschiedenartiger elektrisch installierter Geräte, wie zur Beleuchtung, Heizung, Lüftung, Fenster- und Türüberwachung, in Aufzügen oder zur Jalousiesteuerung usw. mit Vorteil eingesetzt werden. Hierbei sind dem eigentlichen Schalter bekanntermaßen oftmals Kennzeichnungselemente wie Beschriftungsfelder oder Displays zugeordnet.

Gemäß dem genannten Gebrauchsmuster ist die Tast-Wippe in ihrem mittigen Bereich über Lagerelemente unmittelbar an einem Gehäuseteil angelenkt. Außerdem ist zur mittelbaren Lagerung der Tast-Wippe ein wahlweise in einer von zwei verschiedenen Lagen montierbarer Schaltarm vorgesehen, wodurch der Tastschalter auf einfache uns schnelle Weise ohne grundsätzliche Konstruktionsänderungen an verschiedenartige Anwendungsfälle anpaßbar ist.

Durch das genannte Patent ist eine elektrische Schaltvorrichtung der eingangs genannten Art unter Schutz gestellt, bei der der Tastschalter ein in einer Rahmenkonstruktion federnd gelagertes Tast-Schaltelement aufweist, das auf Schaltkontakte einwirkt, die auf einer Schaltplatine angeordnet sind, wobei das Tast-Schaltelement als Wippe ausgebildet ist und wobei unterhalb von zwei gegenüberliegenden Wippenenden zwischen der Wippe und der Schaltplatine jeweils ein Druckfederelement angeordnet ist. An der Wippe sind - vom jeweiligen Wippenende gesehen - im Bereich jedes Federelementes außenliegende, senkrecht zur Wippenlängsachse verlaufende, jeweils durch zwei angeformte Lageransätze gebildete Schwenkachsen vorgesehen. Die Lageransätze sind in der Rahmenkonstruktion in von der Schaltplatine wegweisender Richtung nach oben abgestützt sowie in Richtung der Schaltplatine nach unten verschiebbar. Für eine besonders einfache Montage und vereinfachte Konstruktion bei Verbesserung der Funktionseigenschaften gegenüber bekannten Tastschaltern ist dabei vorgesehen, daß die Rahmenkonstruktion aus einem Tragrahmen und aus einem mit diesem verbindbaren Blendrahmen besteht, wobei zwischen diesen Rahmenteilen die Wippe gelagert und durch den Blendrahmen nach oben abgestützt ist und wobei die Lageransätze in senkrecht zur Schaltplatine verlaufenden Führungsschlitzen verschiebbar geführt sind. Die Führungsschlitze befinden sich dabei in einem zwischen dem Blendrahmen und dem Tragrahmen angeordneten Lagerrahmen. Mittig zwischen den Schaltelementen ist an diesem Lagerrahmen zwischen der Wippe und der Platine ein Lagersteg ausgebildet, an dem die Wippe in einer Schaltstellung zur Anlage kommt. Auf der Wippe können durchsichtige Abdeckungen lösbar befestigt sein, unter denen als Kennzeichnungselemente Beschriftungsträger angeordnet werden können. Diese Schaltvorrichtung hat sich in der Praxis bewährt.

Jedoch besteht bei den bekannten elektrischen Schaltvorrichtungen der eingangs beschriebenen Art - insbesondere dann, wenn mehrere Schalter als bauliche Einheit vereinigt sind - ein Problem darin, das jeweilige Kennzeichnungselement eindeutig dem Tastschalter zuzuordnen. Dieses Problem wird zwar teilweise durch die aus der EP-B-0 678 885 bekannte Anbringung eines Beschriftungsträgers auf der Tast-Wippe gelöst, eine Beschriftung erweist sich jedoch als unzureichend, wenn das Kennzeichnungselement auch zur Signalisierung dynamisch veränderlicher Schaltzustände eingesetzt werden soll.

Der vorliegenden Erfindung liegt die Aufgabe zugrunde, eine elektrische Schaltvorrichtung der eingangs genannten Art mit konstruktiv einfachen Mitteln derart zu verbessern, daß sie eine eindeutige Zuordnung des Kennzeichnungselementes zum zugehörigen Tastschalter gestattet, wobei letzteres bedarfsweise auch zur Signalisierung dynamisch veränderlicher Schaltzustände eingesetzt werden soll.

Erfindungsgemäß wird diese Aufgabe dadurch gelöst, daß das Kennzeichnungselement auf der Schaltplatine angeordnet ist und von der Tast-Wippe brückenartig übergriffen wird, wobei die Tast-Wippe in der Rahmenkonstruktion frei gelagert und seitlich des Kennzeichnungselementes mit einem eine Schaltverkippung zulassendem seitlichem Spiel senkrecht zur Erstreckungsebene der Schaltplatine anschlagbegrenzt geführt ist.

Im Gegensatz zu den oben beschriebenen bekannten elektrischen Schaltvorrichtungen ist bei der erfindungsgemäßen Schaltvorrichtung die Tast-Wippe des Tastschalters vorteilhafterweise weder mittig noch endseitig über Lagerelemente, Lageransätze, Lagerstege, einen Schaltarm oder dergleichen gehalten, sondern in der Rahmenkonstruktion - abgesehen von der Anschlagsbegrenzung in senkrechter Richtung zur Schaltplatine - frei verschieblich und um einen für den Schaltvorgang ausreichenden geringen Winkelbetrag verkippbar gelagert. Auf einen speziellen Lagerrahmen (wie gemäß der EP-B-0 678 885) kann verzichtet werden. Durch diese vorteilhaft einfache Konstruktion wird der Raum zwischen der Schaltplatine und der Tast-Wippe frei zur Aufnahme eines Kennzeichnungselementes. Die Zuordnung des Kennzeichnungselementes zum zugehörigen Tastschalter kann somit eindeutig erfolgen.

Das Kennzeichnungselement kann dabei - wie oben dargestellt, in anderer Anordnung bekannt - ein Beschriftungsträger, aber auch in besonders bevorzugter Ausführung ein Display, wie beispielsweise ein LCD-Anzeigefeld, sein, wodurch auch zeitlich sich ändernde Schaltzustände in eindeutiger Zuordnung zum Tastschalter angezeigt werden können.

Die spezielle Lagerung der Tast-Wippe bietet dabei eine Reihe vorteilhafter, insbesondere multifunktioneller Bedienmöglichkeiten für die erfindungsgemäße elektrische Schaltvorrichtung, die über diejenigen der bekannten Schaltvorrichtungen hinausgehen. Wenn unter jedem der beiden Wippenenden jeweils ein Druckfederelement und ein Schaltkontakt angeordnet ist, gibt es folgende Schaltmöglichkeiten: Schalten durch Druck auf das erste Wippenende, Schalten durch Druck auf das zweite Wippenende, Schalten durch gleichzeitigen Druck auf beide Wippenenden. So kann beispielsweise die elektrische Schaltung derart ausgeführt werden, daß durch einen längeren gleichzeitigen Druck auf beide Wippenenden eine andere Schaltkonfiguration oder eine andere Bedienebene der gedrückten Wippe oder der einzelnen Schaltkontakte erreicht wird. Auch eine Auslegung eines elektrischen Schaltkreises mit "Toggle-Funktion" der erfindungsgemäßen Schalteinrichtung, d.h. als bistabile Kippschaltung, ist ohne weiteres möglich.

Weitere vorteilhafte Ausgestaltungsmerkmale der Erfindung sind in den Unteransprüchen sowie der folgenden Beschreibung enthalten.

Anhand zweier in der Zeichnung dargestellter, bevorzugter Ausführungsbeispiele soll im folgenden die Erfindung näher erläutert werden. Dabei zeigen:
- Fig. 1: in perspektivischer Explosionsdarstellung, eine erfindungsgemäße elektrische Schaltvorrichtung in einer ersten Ausführung einschließlich eines zu schaltenden elektrischen Gerätes,
- Fig. 2: in perspektivischer Explosionsdarstellung, eine erfindungsgemäße elektrische Schaltvorrichtung in einer zweiten Ausführung einschließlich eines zu schaltenden elektrischen Gerätes,
- Fig. 3: die erfindungsgemäße elektrische Schaltvorrichtung der in Fig. 1 dargestellten ersten Ausführung im Zusammenbau,
- Fig. 4: zwei Rahmen- bzw. Gehäuseteile zur weiteren Modifikation der in Fig. 1 und 3 dargestellten Ausführung einer erfindungsgemäßen elektrischen Schaltvorrichtung.

In den beiden Figuren der Zeichnung sind gleiche bzw. einander entsprechende Teile stets mit denselben Bezugszeichen versehen, so daß sie in der Regel auch jeweils nur einmal beschrieben werden.

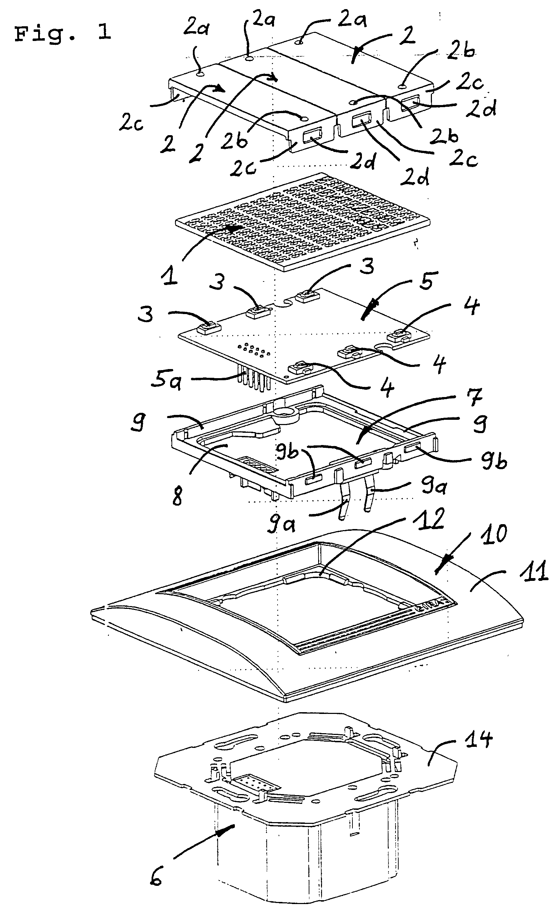

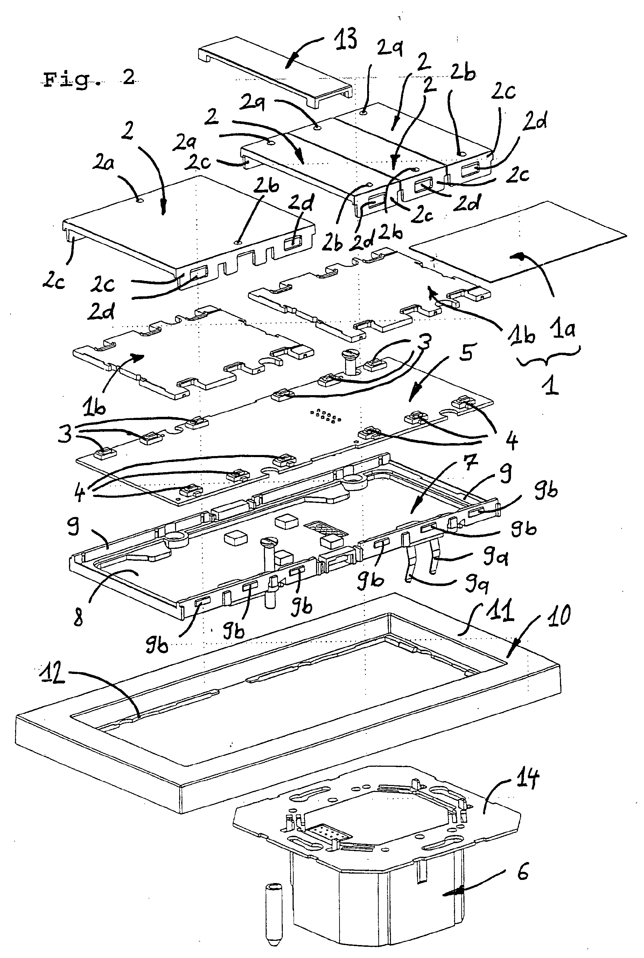

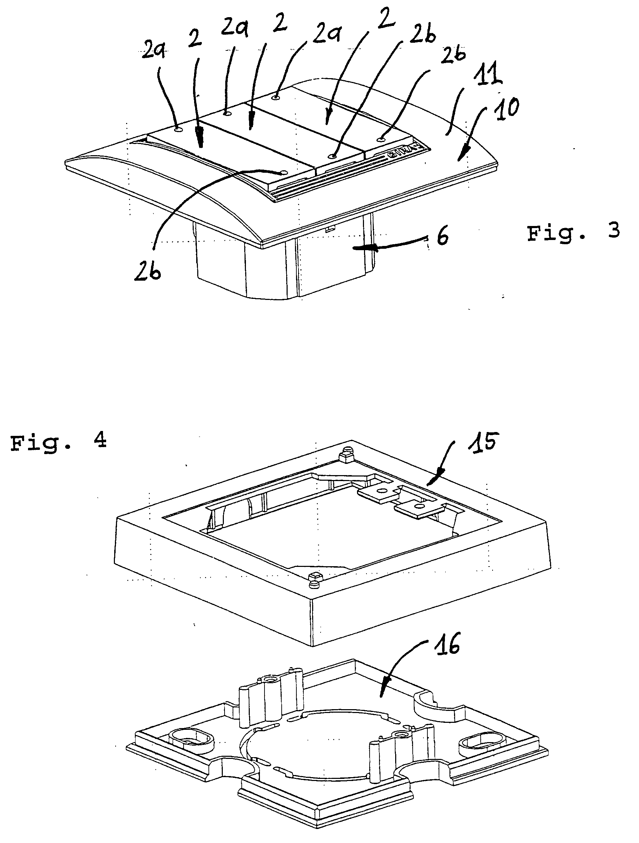

Wie sich zunächst aus Fig. 1 ergibt, weist eine erste Ausführung einer erfindungsgemäßen elektrischen Schaltvorrichtung einen Tastschalter und ein dem Tastschalter zugeordnetes Kennzeichnungselement 1 auf. Das Kennzeichnungselement 1 ist ein Display, z.B. ein LCD-Anzeigefeld.

In bevorzugter Ausführung kann, um das Kennzeichnungselement 1 auch bei ungünstigen Umgebungsverhältnissen deutlich erkennbar zu machen, eine zusätzliche Beleuchtungseinrichtung für das Kennzeichnungselement 1 vorgesehen sein. Diese kann mit Vorteil eine Stromsparschaltung, d.h. einen Zeitschalter, umfassen, der bei Nichtbedienung der Schaltvorrichtung nach einer definierten Zeitdauer die Beleuchtung abschaltet. Die Beleuchtung kann außerdem parametrierbar gestaltet werden, d.h. derart, daß gleichzeitig oder wahlweise eine Bedienung (Ein-/Ausschalten) durch Tastendruck, Objektansteuerung und/oder Annäherung an den Tastschalter herbeigeführt werden kann.

Der Tastschalter umfaßt mindestens eine in einer Rahmenkonstruktion federnd gelagerten Tast-Wippe 2. In der dargestellten ersten Ausführung sind dabei insbesondere drei gleichartige Tast-Wippen 2, eine Tastschalterkombination bildend, parallel zueinander angeordnet. Das das Kennzeichnungselement 1 bildende Display besitzt dabei eine derartige Größe, daß es von allen drei Tast-Wippen 2 brückenartig übergriffen wird. Einzelne (nicht näher bezeichnete) Segmente des Displays können dabei jedoch als ausreichend große Informationseinheiten - wie Fig. 1 zeigt - jeder Tast-Wippe 2 zugeordnet sein.

Die Tast-Wippen 2 können auf ihrer Oberseite, insbesondere an ihren beiden Wippenenden, vorzugsweise punktförmige, Erhebungen oder Vertiefungen 2a, 2b aufweisen. Dadurch wird vorteilhafterweise neben der optischen auch eine haptische Erfassung der Tast-Wippen 2 möglich.

Für den dauerhaften Gebrauch der Tast-Wippen 2 ist dabei auch insbesondere eine kratzfeste Ausführung ihrer Oberfläche - z.B. durch eine Folienhinterspritzung - von Vorteil.

Die Tast-Wippen 2 wirken jeweils auf Schaltkontakte 3, 4 ein, welche auf einer Schaltplatine 5 angeordnet sind, wobei unterhalb der beiden einander gegenüberliegenden Wippenenden zwischen der Tast-Wippe 2 und der Schaltplatine 5 jeweils mindestens auch ein Druckfederelement angeordnet ist. Diese Druckfederelemente können separate Bauteile sein, können aber vorteilhafterweise - wie dargestellt - auch als gleichzeitig als Schaltkontakte wirkende Gummi-Schaltelemente 3, 4 ausgebildet sein, die direkt mit der Schaltplatine 5 verbunden sind (sogenannte SMD - Surface Mounted Device - Kontakte). Im dargestellten bevorzugten Fall sind somit den drei Tast-Wippen 2 entsprechend sechs federelastisch wirkende Gummi-Schaltelemente 3, 4 jeweils paarweise zueinander unter den Wippenenden angeordnet.

Die Schaltplatine 5 besitzt elektrische Leitungsverbindungen, von denen jedoch nur Steckverbindungen 5a zum elektrischen Anschluß an ein zu schaltendes Gerät 6 dargestellt sind.

Erfindungsgemäß ist im Montagezustand das Kennzeichnungselement 1 auf der Schaltplatine 5 angeordnet und wird von der Tast-Wippe 2, die zur Sicherung der Erkennbarkeit des Kennzeichnungselmentes 1 bevorzugt zumindest bereichsweise aus einem durchsichtigen Material bestehen sollte, brückenartig übergriffen. Die Tast-Wippe 2 ist dabei - wie nachstehend noch genauer ausgeführt wird - in der Rahmenkonstruktion frei gelagert und mit einem eine Schaltverkippung zulassendem seitlichem Spiel senkrecht zur Erstreckungsebene der Schaltplatine 5 anschlagbegrenzt geführt.

Außerdem kann/können mit Vorteil (nicht zeichnerisch dargestellt) unter der brückenartig ausgebildeten Tast-Wippe 2 über bzw. auf der Schaltplatine 5, bevorzugt im Bereich der Wippenenden, mindestens eine, vorzugsweise zwei LED angeordnet sein, die derart elektrisch geschaltet sind, daß sie einen jeweils vorliegenden Schaltstatus der erfindungsgemäßen Schaltvorrichtung signalisieren.

Die Schaltplatine 5 kann von einem darunter angeordneten Tragrahmen 7 aufgenommen werden. Dieser Tragrahmen 7 ist insbesondere rechteckig ausgebildet. Der Tragrahmen 7 besitzt eine Grundplatte 8, die einen umlaufenden Randsteg 9 aufweist. In den vom Randsteg 9 umschlossenen Bereich ist die Schaltplatine 5 einsetzbar, auf der im Montagezustand das Kennzeichnungselement 1 aufliegt.

Die vorstehend bereits mehrfach erwähnte Rahmenkonstruktion umfaßt einerseits den die Schaltplatine 5 unmittelbar und das Kennzeichnungselement 2 mittelbar halternden Tragrahmen 7 sowie andererseits einen mit dem Tragrahmen 7 verbindbaren, und den Tragrahmen 7 sowie die Tast-Wippe 2 umgreifenden Blendrahmen 10. Der Blendrahmen 10 kann (wie der Tragrahmen 7) ebenfalls insbesondere rechteckig ausgebildet sein und weist ebenfalls einen umlaufenden Rand 11 auf.

Der Blendrahmen 10 wird auf das zu schaltende Gerät 6 - im dargestellten Fall ein Bus-Gerät - beispielsweise unter Verrastung aufgesetzt, während die montierten übrigen Elemente (Tragrahmen 7, Schaltplatine 5, Kennzeichnungselement 1, Tast-Wippen 2) in den Blendrahmen 10 eingesetzt werden, wobei sie der umlaufende Rand 11 seitlich umfaßt und sie unterseitig auf von dem Rand 11 nach innen ragenden dazu ausgebildeten Auflageansätzen 12 aufliegen. Dabei können geeignete Verbindungsmittel, wie z.B. Rastelemente oder die am umlaufenden Randsteg 9 des Tragrahmens 7 dargestellten Klemmfedern 9a, zur formschlüssigen oder form- und kraftschlüssigen Verbindung von Blendrahmen 10 und Tragrahmen 7 vorgesehen sein.

Nach der Montage der erfindungsgemäßen Schaltvorrichtung und des zu schaltenden Gerätes ergibt sich dann ein kompakter und formschöner Aufbau, wie ihn die Zusammenbau-Darstellung der erfindungsgemäßen ersten Ausführung in Fig. 3 zeigt.

Was nun die Lagerung der Tast-Wippen 2 im Detail betrifft, so ist jede Tast-Wippe 2 einerseits außenseitig in dem Blendrahmen 10 mittels dessen Randes 11 senkrecht zur Erstreckungsebene der Schaltplatine 5 völlig freibeweglich geführt, während sie andererseits innenseitig an dem Tragrahmen 7 senkrecht zur Erstreckungsebene der Schaltplatine 5 anschlagbegrenzt geführt ist. Für diese anschlagbegrenzte Führung weist die Tast-Wippe 2 an ihren Wippenenden seitliche, im wesentlichen senkrecht zur Erstrekkungsebene der Schaltplatine 5 gerichtete Stegansätze 2c auf, in denen sich Führungsfenster 2d für korrespondierende, an Außenseiten des Randsteges 9 des Tragrahmens 7 angeordnete, im Montagezustand in die Führungsfenster 2d eingreifende Führungsvorsprünge 9b befinden. Zur Montage der Tast-Wippen 2 werden ihre Führungsfenster 2d mit den Führungsvorsprüngen 9b des Tragrahmens verrastet (eingeklipst).

In der Grundstellung der Tast-Wippe 2, in der sie eine horizontale, d.h. parallel zur Erstreckungsebene der Schaltplatine 5 (- auch der Erstreckungsebenen des Kennzeichnungselementes 1 und der Grundplatte 8 des Tragrahmens 7 -) ausgerichtete Position einnimmt, stützt sich die Schalt-Wippe 2 an ihren beiden Enden auf den Gummi-Schaltelementen 3, 4 ab und steht unter deren Druckwirkung. Der untere Rand der Führungsfenster 2d in den Stegansätzen 2c der Tast-Wippe 2 liegt dabei (einen ersten Anschlag bildend) jeweils am unteren Rand des korrespondierenden Führungsvorsprungs 9b an der Außenseiten des Randsteges 9 des Tragrahmens 7 an.

Wird nun die Tast-Wippe 2 zum Auslösen eines Schaltvorgangs einseitig oder beidseitig gegen die federelastische Wirkung der Gummi-Schaltelemente 3, 4 heruntergedrückt, so verschiebt sich die Öffnung des/der jeweiligen Führungsfenster(s) 2d entlang des Randsteges 9 des Tragrahmens 7 nach unten, d.h. in Richtung auf das elektrische Gerät 6 hin, bis der obere Rand des/der jeweiligen Führungsfenster(s) 2d jeweils am oberen Rand (an den oberen Rändern) des/der korrespondierenden Führungsvorsprung(s) 9b (einen zweiten Anschlag bildend) zur Anlage kommt. Der Verschiebeweg bzw. die Fensterhöhe ist dabei so auzuwählen, daß der Schaltvorgang ausgelöst, das jeweilige Gummi-Schaltelemente 3, 4 jedoch nicht überbeansprucht oder zerstört werden kann.

Bei einseitigem Druck auf die Tast-Wippe 2 zum Schalten tritt eine Schaltverkippung ein, die durch das seitliche Spiel zum Blendrahmen 10 ermöglicht wird. Die Verkippung kann jedoch auf einen geringen Winkelbetrag begrenzt werden, wodurch keine ästhetische Beeinträchtigung durch einen zu großen Spalt zwischen Tast-Wippe 2 und Blendrahmen 10 auftritt.

Bei Einsatz eines Displays als Kennzeichnungselement 1 ist eine Bedienung der Tast-Wippen 2 in allen Funktionen uneingeschränkt möglich.

Die Schaltstellung einer Tast-Wippe 2 bleibt aufgrund der federelastischen Wirkung der Gummi-Schaltelemente 3, 4 nur so lange aufrechterhalten, wie ein äußerer Druck auf die Tast-Wippe 2 ausgeübt wird. Sobald dieser äußere Druck nicht mehr vorhanden ist, geht die Tast-Wippe 2 aufgrund der von den Gummi-Schaltelemente 3, 4 ausgeübten Federkraft wieder in ihre Grundstellung zurück.

Das in Fig. 2 dargestellte zweite Ausführungsbeispiel einer erfindungsgemäßen elektrische Schaltvorrichtung unterscheidet sich von der ersten Ausführung insbesondere dadurch, daß anstelle eines Displays als Kennzeichnungselement 1 ein Beschriftungsträger vorgesehen ist. Diese kann beispielsweise - wie in Fig. 2 ersichtlich - zweiteilig aufgebaut sein, indem er eine beschreibbares Folienoder Papierblatt 1a und einen darunter angeordneten Lichtleiter 1b umfaßt.

Ein weiterer Unterschied besteht darin, daß die zweite Ausführung eine Tast-Wippe 2 mehr umfaßt als die erste Ausführung. Diese Tast-Wippe 2 ist dreimal so breit wie die anderen Tast-Wippen 2 und wirkt gleichzeitig - je nach Schaltungsart - auf drei bzw. sechs Gummi-Schaltelemente 3, 4. Auch diese Schaltwippe 2 übergreift das ihr zugeordnete Kennzeichnungselement 1 und ist erfindungsgemäß gelagert und geführt. Sie ist von den drei anderen Tast-Wippen 2 durch einen in der Rahmenkonstruktion gehaltenen separaten Zwischensteg 13 getrennt.

Schließlich weist der Blendrahmen 10 der zweiten Ausführung, insbesondere dessen Rand 11, eine etwas andere (kantigere) Form als die des Blendrahmens 10 der ersten Ausführung auf.

Die Erfindung ist nicht auf die beschriebenen Ausführungsbeispiele beschränkt, sondern umfaßt auch alle im Sinne der Erfindung gleichwirkenden Ausführungen, wie dies bereits aus der vorstehenden Beschreibung hervorgeht. So könnte eine erfindungsgemäße elektrische Schaltvorrichtung - im Gegensatz zu den beiden dargestellten Beispielen, die als Unterputzausführungen konzipiert sind, wobei das zu schaltende elektrische Gerät 6 charakteristischerweise einen Tragring 14 zur Befestigung in einer Dose aufweist - auch als Aufputzausführung zur Anwendung kommen oder in einem Installationskanal montiert werden, ohne daß der Rahmen der Erfindung verlassen wird.

Bei einer Aufputzausführung können alle beschriebenen Teile Tast-Wippe 2, Kennzeichnungselement 1, Schaltplatine 5, Tragrahmen 7, Blendrahmen 10 in nahezu unveränderter Form zum Einsatz kommen, lediglich das elektrische Gerät 6 wird möglichst flach und ohne Tragring 14 ausgeführt und dann - beispielsweise bei einer ähnlichen wie der ersten Ausführung der Erfindung - zwischen den beiden in Fig. 4 dargestellten Rahmen- bzw. Gehäuseteilen 15, 16 plaziert, wobei das untere Rahmen- bzw. Gehäuseteil 16 in an sich bekannter Weise für eine Wandbefestigung ausgebildet ist.

Da die Tast-Wippen 2 in ihrer Gestaltungsform und Größe gleichartig ausgebildet sind, können sie leicht gegeneinander ausgetauscht werden. So können anstelle der großen Tast-Wippe 2 in der zweiten Ausführung drei keine Tast-Wippen 2 treten und somit kann eine elektrische Schaltvorrichtung mit sechs Funktionstasten realisiert werden.

Was die rastend wirkenden Anschlagelemente der Tast-Wippen 2 (Führungsfenster 2d) und des Tragrahmens 7 (Führungsvorsprünge 9b) betrifft, so können diese in umgekehrter Weise (Fenster am Rahmen/Vorsprung an der Wippe) angeordnet oder durch Elemente anderer Form, aber mit gleichartiger Wirkung (z.B. Rasthaken oder dergleichen) substituiert sein.

Weiterhin kann der Fachmann zusätzliche technische Maßnahmen vorsehen, durch die die Erfindung in zweckmäßiger Weise ausgestaltet wird. Beispielsweise ist es vorteilhaft, die Tast-Wippen 2 an ihren Wippenenden - bevorzugt durch Anwendung eines Zweikomponenten-Spritzverfahrens - blickdicht zu gestalten, so daß ein Einblick auf die unter den Tast-Wippen 2 liegenden elektronischen Bauteile verhindert wird.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Kennzeichnungselement
- 1a: Folien- oder Papierblatt von 1
- 1b: Lichtleiter
- 2: Tast-Wippe
- 2a: Haptikpunkt auf 2
- 2b: Haptikpunkt auf 2
- 2c: Stegansatz an 2
- 2d: Führungsfenster in 2c
- 3: Schaltkontakt/Druckfederelement auf 5 (SMD-Gummischaltelement)
- 4: Schaltkontakt/Druckfederelement auf 5 (SMD-Gummischaltelement)
- 5: Schaltplatine
- 5a: Steckverbindungen an 5 für 6
- 6: elektrisches Gerät
- 7: Tragrahmen für 5
- 8: Grundplatte von 7
- 9: Randsteg von 7
- 9a: Klemmfeder an 9
- 9b: Führungsvorsprung
- 10: Blendrahmen
- 11: Rand von 10
- 12: Auflageansätze
- 13: Zwischensteg
- 14: Tragring an 6
- 15, 16: Gehäuseteile für 6 bei AP-Montage

## Patentansprüche

1. Elektrische Schaltvorrichtung, mit einem Tastschalter und mit einem dem Tastschalter zugeordneten Kennzeichnungselement (1), wobei der Tastschalter eine in einer Rahmenkonstruktion federnd gelagerten Tast-Wippe (2) umfaßt, die auf mindestens einen Schaltkontakt (3, 4) einwirkt, welcher auf einer Schaltplatine (5) angeordnet ist, wobei unterhalb von zwei gegenüberliegenden Wippenenden zwischen der Tast-Wippe (2) und der Schaltplatine (5) jeweils mindestens ein Druckfederelement (3, 4) angeordnet ist,
**dadurch gekennzeichnet, daß** das Kennzeichnungselement (1) auf der Schaltplatine (5) angeordnet ist und von der Tast-Wippe (2) brückenartig übergriffen wird, wobei die Tast-Wippe (2) in der Rahmenkonstruktion frei gelagert und seitlich des Kennzeichnungselementes (1) mit einem eine Schaltverkippung zulassendem seitlichem Spiel senkrecht zur Erstreckungsebene der Schaltplatine (5) anschlagbegrenzt geführt ist.

2. Elektrische Schaltvorrichtung nach Anspruch 1,
**dadurch gekennzeichnet, daß** die Rahmenkonstruktion einen die Schaltplatine (5) und das Kennzeichnungselement (1) halternden Tragrahmen (7) sowie einen mit dem Tragrahmen (7) verbindbaren, und den Tragrahmen (7) sowie die Tast-Wippe (2) umgreifenden Blendrahmen (10) umfaßt, wobei die Tast-Wippe (2) in dem Blendrahmen (10) senkrecht zur Erstreckungsebene der Schaltplatine (5) geführt und an dem Tragrahmen (7) senkrecht zur Erstreckungsebene der Schaltplatine (5) anschlagbegrenzt geführt ist.

3. Elektrische Schaltvorrichtung nach Anspruch 1 oder 2,
**dadurch gekennzeichnet, daß** die Tast-Wippe (2) an ihren Wippenenden seitliche, im wesentlichen senkrecht zur Erstreckungsebene der Schaltplatine (5) gerichtete Stegansätze (2c) aufweist, in denen sich Führungsfenster (2d) für korrespondierende, an Außenseiten des Tragrahmens (7) angeordnete, im Montagezustand in die Führungsfenster (2d) eingreifende Führungsvorsprünge (9b) befinden.

4. Elektrische Schaltvorrichtung nach einem der Ansprüche 1 bis 3,
**dadurch gekennzeichnet, daß** unter jedem Wippenende jeweils ein Druckfederelement (3, 4) und ein Schaltkontakt (3, 4) angeordnet ist.

5. Elektrische Schaltvorrichtung nach einem der Ansprüche 1 bis 4,
**dadurch gekennzeichnet, daß** die Druckfederelemente (3, 4) als gleichzeitig als Schaltkontakte (3, 4) wirkende Gummi-Schaltelemente (3, 4) ausgebildet und unmittelbar mit der Schaltplatine (5) verbunden sind.

6. Elektrische Schaltvorrichtung nach einem der Ansprüche 1 bis 5,
**dadurch gekennzeichnet, daß** das Kennzeichnungselement (1) ein Display ist.

7. Elektrische Schaltvorrichtung nach einem der Ansprüche 1 bis 5,
**dadurch gekennzeichnet, daß** das Kennzeichnungselement (1) ein Beschriftungsträger ist.

8. Elektrische Schaltvorrichtung nach einem der Ansprüche 1 bis 8,
**gekennzeichnet durch** eine Beleuchtungseinrichtung für das Kennzeichnungselement (1).

9. Elektrische Schaltvorrichtung nach Anspruch 8,
**dadurch gekennzeichnet, daß** die Beleuchtungseinrichtung einen Zeitschalter umfaßt, der bei Nichtbedienung der Tast-Wippe (2) nach einer definierten Zeitdauer die Beleuchtung abschaltet.

10. Elektrische Schaltvorrichtung nach einem der Ansprüche 1 bis 9,
**dadurch gekennzeichnet, daß** die Tast-Wippe (2) auf ihrer Oberseite, insbesondere an den Wippenenden, vorzugsweise punktförmige, Erhebungen (2a, 2b) oder Vertiefungen aufweist.

11. Elektrische Schaltvorrichtung nach einem der Ansprüche 1 bis 10,
**gekennzeichnet durch** mindestens eine, vorzugsweise zwei, unter der Tast-Wippe (2) liegende LED, die derart elektrisch geschaltet ist/-sind, daß sie einen jeweils vorliegenden Schaltstatus signalisier(t)/(en).

12. Elektrische Schaltvorrichtung nach einem der Ansprüche 1 bis 11,
**dadurch gekennzeichnet, daß** die Tast-Wippe (2) zumindest bereichsweise aus einem durchsichtigen Material besteht.

13. Elektrische Schaltvorrichtung nach einem der Ansprüche 1 bis 12,
**dadurch gekennzeichnet, daß** die Tast-Wippe (2) an ihren Wippenenden, bevorzugt durch Anwendung eines Zweikomponenten-Spritzverfahrens, blickdicht gestaltet ist.

14. Elektrische Schaltvorrichtung nach einem der Ansprüche 1 bis 13,
**dadurch gekennzeichnet, daß** mehrere Wippen (2), eine Tastschalterkombination bildend, parallel zueinander angeordnet sind.
